# EUROPÄISCHE PATENTSCHRIFT

(11) **EP 2 064 517 B1**
(45) Veröffentlichungstag und Bekanntmachung des Hinweises auf die Patenterteilung: **27.02.2013**
(21) Anmeldenummer: 07802894.1
(22) Anmeldetag: 27.08.2007
(51) Int. Cl.: G01B 11/275

(54) **VERFAHREN ZUM AUFFINDEN EINES GEOMETRIEDETAILS ZUR BESTIMMUNG DER RÄUMLICHEN LAGE EINER RADFELGE ZU EINEM MESSGERÄT SOWIE VERFAHREN UND VORRICHTUNG ZUR BESTIMMUNG DER RÄUMLICHEN LAGE EINER RADFELGE ZU EINEM MESSGERÄT**
METHOD FOR LOCATING A GEOMETRIC DETAIL FOR THE DETERMINATION OF THE SPATIAL POSITION OF A WHEEL RIM WITH RESPECT TO A MEASURING DEVICE AND METHOD AND DEVICE FOR DETERMINING THE SPATIAL POSITION OF A WHEEL RIM WITH RESPECT TO A MEASURING DEVICE
PRODEDE DE DETECTION D'UN DETAIL GEOMETRIQUE POUR DEFINIR LA POSITION DANS L'ESPACE D'UNE JANTE DE ROUE PAR RAPPORT A UN APPAREIL DE MESURE AINSI QUE PROCEDE ET DISPOSITIF POUR DEFINIR LA POSITION DANS L'ESPACE D'UNE JANTE DE ROUE PAR RAPPORT A UN APPAREIL

(30) Priorität: 08.09.2006 DE 102006042308
(43) Veröffentlichungstag der Anmeldung: 03.06.2009
(73) Patentinhaber: Robert Bosch GmbH, 70442 Stuttgart (DE)
(72) Erfinder: SCHOMMER, Stefan, 85716 Unterschleissheim (DE); BUX, Hermann, 86559 Adelzhausen (DE)
(86) Internationale Anmeldenummer: PCT/EP2007/058853
(87) Internationale Veröffentlichungsnummer: WO 2008/028831

(56) Entgegenhaltungen:
- EP-A- 0 895 056
- WO-A-2006/074026
- DE-A1-102004 013 441
- US-B1- 6 323 776

## Beschreibung

Die Erfindung betrifft ein Verfahren zum Auffinden eines Geometriedetails zur Bestimmung der räumlichen Lage einer Radfelge zu einem Messgerät, ein Messverfahren und ein Messgerät zur Bestimmung der räumlichen Lage einer Radfelge sowie eine Fahrwerksvermessungseinrichtung, bei denen ein derartiges Verfahren zum Auffinden eines Geometriedetails zur Bestimmung der räumlichen Lage einer Radfelge zu einem Messgerät eingesetzt wird.

Aus der DE 10 2004 013 441 A1 sind ein Messverfahren und ein Messgerät zur Bestimmung der räumlichen Lage einer Radfelge sowie eine Fahrwerksvermessungseinrichtung bekannt. Dieses Messverfahren basiert auf der Erkennung eines Radfelgengeometriedetails, bspw. des Felgenhorns, dessen Auswertung bzgl. der Lage im Raum und der Zusammenführung der Ergebnisse zu einer Achsvermessung.

Es kommt vor, dass aufgrund einer Verschmutzung der Radfelge kein Geometriedetail erkannt wird. Dann kann das Messverfahren der DE 10 2004 013 441 A1 nicht ausgeführt werden.

Es kommt auch vor, dass mehrere Felgengeometriedetails auf der Radfelge erkannt werden, und dass das Verfahren basierend auf einem weniger geeigneten Felgengeometriedetail ausgeführt wird, wodurch nur suboptimale Ergebnisse erzielt werden.

Es ist daher Aufgabe der vorliegenden Erfindung, ein Verfahren und eine Vorrichtung zum Auffinden eines Geometriedetails und zur Bestimmung der räumlichen Lage einer Radfelge anzugeben, die eine genaue Achsvermessung ermöglichen, wenn bei der eindeutigen Erkennung der Radfelgengeometriedetails Probleme auftreten.

Die Aufgabe wird durch den Gegenstand der unabhängigen Patentansprüche gelöst. Vorteilhafte Weiterbildungen ergeben sich aus den Unteransprüchen.

Mit einem erfindungsgemäßen Verfahren können Geometriedetails zur Bestimmung deren räumlicher Lage zu einem Messgerät aufgefunden werden.

Das Geometriedetail ist üblicherweise ein kreisrundes oder ellipsoides, torusförmiges oder ein punkt - oder strichförmiges Element der Radfelge. Das Geometriedetail muss jedoch nicht Teil einer Radfelge sein, sondern kann auch ein auf der Radfelge oder auf der Radnabe befestigtes Target oder ein auf der Radfelge oder auf der Radnabe befestigter Gegenstand, bspw. eine Radzierblende o.ä. sein, oder eine Stahlscheibe o.ä., wie sie bspw. im Motorsport als Messrad auf der Radnabe befestigt wird. Wenn in dieser Beschreibung nachfolgend von Radfelgen-Geometriedetail gesprochen wird, so sind davon sowohl Geometriedetails auf der Radfelge selbst als auch auf der Radfelge oder auf der Radnabe befestigte Targets oder Gegenstände umfasst.

Bei einer Variante des erfindungsgemäßen Verfahrens wird zunächst wenigstens eine Messkamera eines Messgeräts einer Fahrwerksvermessungseinrichtung oder einer Kraftfahrzeugprüfstraße auf eine Radfelge ausgerichtet und ein Bild der Radfelge erfasst. Anschließend werden mehrere Geometriedetails in dem Bild der Radfelge ermittelt, so dass für die Bestimmung der räumlichen Lage der Radfelge zu dem Messgerät nicht eindeutig ist, welches Geometriedetail dafür am besten geeignet ist. Radfelgen eines Kraftfahrzeugrades weisen nämlich oftmals mehr als nur ein für das Messverfahren brauchbares Geometriedetail auf. Daher wird nun im nächsten Verfahrensschritt eines der erkannten Geometriedetails für die Bestimmung der räumlichen Lage der Radfelge zu dem Messgerät ausgewählt.

Für diese Auswahl stehen unterschiedliche Entscheidungskriterien zur Verfügung, bspw. ist das Felgenhorn als das für das nachfolgende Messverfahren bevorzugte Geometriedetail zu bevorzugen, falls es auf dem Bild der Radfelge ermittelt worden ist. Alternativ können andere Bewertungskriterien bspw. die Bevorzugung torusförmiger gegenüber punkt- oder strichförmigen Geometriedetails, die Sichtbarkeit oder Kontrastverhältnisses des Geometriedetails oder ein möglichst großer Durchmesser bei torusförmigen Geometriedetails zur Anwendung kommen. Grundsätzlich können nämlich unterschiedliche Felgengeometriedetails einer Radfelge für ein nachfolgendes Verfahren zur Bestimmung der räumlichen Lage einer Radfelge zu einem Messgerät geeignet sein.

Gemäß einer ersten Ausführungsform des erfindungsgemäßen Verfahrens werden zwei Radfelgen gleichzeitig betrachtet, und zwar von jeweils wenigstens einer Messkamera eines Messgeräts. Dabei werden zunächst die Messkameras der beiden Messgeräte auf die beiden Radfelgen ausgerichtet und anschließend von jeder Messkamera wenigstens ein Bild der Radfelge erfasst.

Gemäß einer weiteren Ausführungsform der Erfindung werden die vier Radfelgen eines Kraftfahrzeugs durch jeweils ein Messgerät mit mindestens einer Kamera erfasst, indem die Messkameras der Messgeräte auf jeweils eine Radfelge ausgerichtet werden und indem anschließend wenigstens ein Bild jeder Radfelge durch die Messkameras erfasst wird.

Selbstverständlich können auch für drei- oder mehrachsige Kraftfahrzeuge zusätzliche Messgeräte mit Messkameras für die Radfelgen der dritten und jeder weiteren Achse vorgesehen werden.

Wenn mehrere Messgeräte zum Einsatz kommen und mehrere Radfelgen durch die Messkameras dieser Messgeräte betrachtet werden, können mehrere Geometriedetails in dem Bild einer Radfelge ermittelt und ein ermitteltes Geometriedetail für die Bestimmung der räumlichen Lage dieser Radfelge zu dem Messgerät ausgewählt werden. Anschließend kann dieses ausgewählte Geometriedetail daraufhin überprüft werden, ob es auch in den Messkamerabildern der anderen Messgeräte vorhanden ist. Falls dies der Fall ist, ist dieses ausgewählte Geometriedetail für die Bestimmung der räumlichen Lage der Radfelgen zu den Messgeräten geeignet. Falls dies nicht der Fall ist, kann versucht werden, dieses Geometriedetail bei den anderen Radfelgenabbildem aufzufinden, oder wenn dies nicht möglich ist, kann ein anderes Geometriedetail ausgewählt werden. Eine Übernahme des optimalen Geometriedetails für alle Radfelgen des Kraftfahrzeugs auf dem Messstand kann in einer Variante somit automatisch geprüft und durchgeführt werden.

Gemäß einer weiteren Ausführungsform der Erfindung können die Geometriedetails der Radfelgen derart gefiltert werden, dass nur diejenigen ermittelt und für eine Auswahl bereitgestellt werden, die in allen Bildern der Radfelgen vorkommen, und dass das optimale Geometriedetail schließlich aus diesen vorgefilterten Geometriedetails ausgewählt wird. Diese Filterfunktion kann dazu führen, dass bereits ein gemeinsames Geometriedetail aller Radfelgen gefunden und nach dem Bewertungskriterien eindeutig als das beste festgelegt wird, so dass keine weitere Auswahl erforderlich ist.

Bei einer Variante eines nicht erfindungsgemäßen Verfahrens zum Auffinden eines Geometriedetails zur Bestimmung der räumlichen Lage einer Radfelge zu einem Messgerät wird zunächst wenigstens eine Messkamera des Messgeräts auf eine Radfelge ausgerichtet und ein Bild dieser Radfelge erfasst. Anschließend wird ein Teilbereich in dem erfassten Bild der Radfelge ausgewählt, dies erfolgt insbesondere dann, wenn in dem erfassten Bild kein Geometriedetail erkannt werden kann, bspw. infolge von Beschädigungen oder einer Verschmutzung der Radfelge oder infolge von optischen Einschränkungen bspw. Schattenverteilungen. Durch die Auswahl des Teilbereichs in dem Bild der Radfelge wird eine Vorauswahl getätigt, anhand derer wenigstens ein Geometriedetail in dem Bild der Radfelge für die Bestimmung deren räumliche Lage zu dem Messgerät erkannt werden kann.

Durch dieses nicht erfindungsgemäße Verfahren wird sichergestellt, dass auch dann ein für die nachfolgende Bestimmung der räumlichen Lage der Radfelge zu dem Messgerät erforderliches Geometriedetail ermittelt wird, wenn ein solches Geomtriedetail auf dem erfassten Bild der Radfelge zunächst nicht erkennbar ist. Durch die Auswahl eines Teilbereichs in dem Bild der Radfelge wird so der Fahrwerksvermessungseinrichtung oder der Kraftfahrzeug-Prüfstraße eine wichtige Hilfestellung gegeben, ohne die eine Bestimmung der räumlichen Lage der Radfelge zu dem Messgerät nicht möglich wäre.

Gemäß einer ersten Ausführungsform dieser Variante wird zur Auswahl eines Teilbereichs in dem Bild der Radfelge wenigstens ein Punkt bestimmt, der bspw. eine Schraube, eine Bohrung oder ein Ventil der Radfelge repräsentiert.

Zumal Tori für die nachfolgenden Bestimmung der räumlichen Lage der Radfelge zu dem Messgerät grundsätzlich besser geeignet sind, können zur Auswahl eines Teilbereichs in dem Bild der Radfelge wenigstens drei Punkte bestimmt werden, durch die ein kreisrundes oder ellipsoides, torusförmiges Geometriedetail verläuft und die auf dem kreisrunden Geometriedetail des angezeigten Bildes liegen.

Besonders vorteilhaft ist es, wenn die wenigstens drei bestimmten Punkte äquidistant sind, d. h. sich in einem gleichmäßigen Abstand auf dem Umfang des Geometriedetails befinden.

In einer weiteren Ausführungsform wird zur Auswahl eines Teilbereichs in dem Bild der Radfelge wenigstens ein rechteckiger Bereich um ein kreisrundes oder ellipsoides Geometriedetail bestimmt. Dadurch kann eine Hilfestellung zum Auffinden eines Geometriedetails gegeben werden, um den zu untersuchenden Bereich geeignet einzuschränken.

Die im folgenden angegebenen vorteilhaften Ausführungsformen der Erfindung beziehen sich auf die erste Verfahrensvariante.

Wenn zwei Stereomeßkameras in einem Winkel auf eine Radfelge ausgerichtet werden, können die erhaltenen Messergebnisse verbessert werden.

Das Bild der Radfelge oder die Bilder der Radfelge und/oder die mehreren ermittelten Geometriedetails können auf einem Anzeigegerät, insbesondere auf einem Bildschirm dargestellt werden, um dem Benutzer so eine visuelle Rückkopplung sowie die Möglichkeit einer Interaktion zu geben.

Die Auswahl eines ermittelten Geometriedetails und/oder eines Teilbereichs mit Bild der Radfelge erfolgt benutzergesteuert, und zwar über ein Anzeigegerät, insbesondere über einen Bildschirm und/oder über ein Eingabegerät, insbesondere eine Maus oder eine Tastatur. Damit wird das Felgengeometriedetail benutzerinteraktiv bestimmt Der Benutzer kann über das Anzeigegerät und das Eingabegerät interaktiv eine Auswahl treffen oder einen Teilbereich auswählen. Auf dem Anzeigegerät wird dabei mindestens das Bild einer der Stereokameras eines Messkopfes dargestellt, auf dem mithilfe des Eingabegeräts entsprechende Interaktionen durchgeführt werden können. Für manche Anwendungsfälle ist es erforderlich, die Bilder beider Stereokameras eines Messkopfes anzuzeigen und interaktiv zu bearbeiten.

Erfindunggsgemäβ wählt der Benutzer eines aus mehreren vom Messsystem angebotenen geeigneten Geometriedetails einer Radfelge eines Rades auf dem angezeigten Bild aus. In einer Verfahrenvariante die nicht Bestanol teil der bleanspruchten Erfindung ist wählt der Benutzer einen Bereich aus, in dem das Messsystem ein Felgengeometriedetail zu ermitteln ist

Alternativ zu der benutzerinteraktiven Bestimmung des Felgengeometriedetails kann die Auswahl eines ermittelten Geometriedetails und/oder eines Teilbereichs in dem Bild der Radfelge in einer Variante durch die Fährwerksvermessung automatisiert oder computergesteuert anhand eines oder mehrerer Bewertungskriterien erfolgen, wodurch das Verfahren automatisiert wird und ein Benutzereingriff entfallen kann.

In einer vorteilhaften Weiterbildung des Verfahrens bewertet die Fahrwerksvermessungseinrichtung das wenigstens eine ermittelte Geometriedetail in dem Bild der Radfelge, und diese Bewertung kann auf dem Anzeigegerät mit angezeigt werden. Dadurch kann bereits während des Verfahrens eine Aussage über das ermittelte Geometriedetail und somit über die voraussichtliche Qualität der Ergebnisse der Bestimmung der räumlichen Lage einer Radfelge zu einem Messgerät getroffen werden.

Bei dem für die Bestimmung der räumlichen Lage einer Radfelge zu einem Messgerät am besten geeigneten Geometriedetail handelt es sich um ein Torus, insbesondere um den Torus des Felgenhorns.

Wenn die Parameter des ausgewählten oder ermittelten Geometriedetails gespeichert werden, können sie für alle folgenden Messungen zum Wiederauffinden des Geometriedetails verwendet werden.

Die Erfindung umfasst ebenfalls ein Verfahren zur Bestimmung der räumlichen Lage einer Radfelge zu einem Messgerät, das wenigstens eine Kamera aufweist, wobei die Radfelge im Blickfeld der Kamera liegt. Dabei wird zunächst ein Modell bereitgestellt, das einen Modellkörper eines lokalisierbaren Radfelgen-Geometriedetails sowie die räumliche Lage des Modellkörpers zu dem Messgerät durch Modellparameter beschreibt. Dann wird ein Bild des Radfelgen-Geometriedetails der Radfelge mit der Kamera erfasst und ein Verfahren zum Auffinden eines Geometriedetails zur Bestimmung der räumlichen Lage einer Radfelge zu einem Messgerät der oben beschriebenen Art durchgeführt.

Anschließend erfolgt das Anpassen oder Anfitten der aus den Modellparametern resultierenden Abbildung des Modellkörpers an das Bild des Radfelgen-Geometriedetails durch Verändern von Modellparametern des Modells, und das Verfolgen der Veränderungen der Modellparameter des Modells beim Anpassen, wobei die Daten bezüglich der Lage des Modellkörpers des Radfelgen-Geometriedetails die räumliche Lage des Radfelgen-Geometriedetails und damit der Radfelge selbst wiedergeben, wenn die aus den Modellparametern resultierende Abbildung des Modellkörpers des Radfelgen-Geometriedetails mit dem erfassten Bild des Radfelgen-Geometriedetails innerhalb vorgegebener Toleranzgrenzen übereinstimmt.

Durch dieses Verfahren werden den tatsächlichen Gegebenheiten bei der Fahrwerkvermessung, das heißt der tatsächlichen Radfelge, Rechnung getragen, um die durch das Felgenhorn aufgespannte Radebene genau zu bestimmen. Systematische Fehler bei den herkömmlichen Verfahren können damit vermieden werden, und durch das Vorschalten des erfindungegemäßen Verfahrens zum Auffinden eines Geometriedetails zur Bestimmung der räumlichen Lage einer Radfelge zu einem Messgerät wird sichergestellt, dass genau ein optimal geeignetes Geometriedetail ausgewählt wird, was die Ergebnisse der Lagebestimmung verbessert.

Eine weitere vorteilhafte Ausgestaltung des erfindungsgemäßen Verfahrens ist dadurch gekennzeichnet, dass der Modellkörper ein sogenannter Schmiegetorus oder eine 3D-CAD-Darstellung ist. Während der Schmiegetorus die einfachste Form eines 3D-Modells für die Felgenrandkontur darstellt, kann auch eine 3D-CAD-Darstellung der betreffenden Felge verwendet werden, wodurch sich ebenfalls gute Ergebnisse erzielen lassen.

Eine weitere vorteilhafte Ausgestaltung des erfindungsgemäßen Verfahrens ist dadurch gekennzeichnet, dass im Falle des Schmiegetorus Modellparameter des Modells ein Hauptradius R und ein Nebenradius r des Torus, eine Position c des Toruszentrums, ein Normalenvektor n der Rotationsebene des Torus und eine Position z des Projektionszentrums einer Lochkamera sind, mit der der Schmiegetorus betrachtet wird. Von diesen Modellparametern des Schmiegetorus sind einige aus den tatsächlichen Abmessungen der Radfelge und aus der Anordnung der Lochkamera bekannt, so dass die Zahl der Unbekannten in dem resultierenden Optimierungsproblem in vorteilhafter Weise reduziert wird, so dass das Anpassen der Abbildung des Schmiegetorus an das Bild der tatsächliche Felge erleichtert wird.

Eine weitere vorteilhafte Ausgestaltung des erfindungsgemäßen Verfahrens ist dadurch gekennzeichnet, dass das Radfelgen-Geometriedetail die Felgenrandkontur ist. Obwohl auch andere Radfelgen-Geometriedetails als Grundlage für die Bestimmung der räumlichen Lage einer Radfelge in Frage kommen, ist die Felgenrandkontur ein bevorzugtes Merkmal, weil dort ein hinreichend guter Kontrast zwischen der Radfelge und dem Reifen zu erwarten ist.

Eine weitere vorteilhafte Ausgestaltung des erfindungsgemäßen Verfahrens ist dadurch gekennzeichnet, dass die Radfelgenkontur mit zwei Kameras erfasst wird, die unter unterschiedlichen Winkeln auf das Rad gerichtet sind. Wie noch gezeigt wird, wäre prinzipiell eine Kamera ausreichend als Grundlage für die Durchführung der Messungen gemäß der Erfindung. Zwei Kameras sind jedoch vorteilhaft in Bezug auf eine Fehlerkorrektur, um einen höheren Genauigkeitsgrad der Messung erhalten.

Eine weitere vorteilhafte Ausgestaltung des erfindungsgemäßen Verfahrens ist dadurch gekennzeichnet, dass das Bild der Radfelge zur Bestimmung eines Drehwinkel-Bezugspunktes an der Felge und zur Segmentierung der Felgenhornkontur längs des Felgenumfangs aufgenommen wird. Die Konturermittlung kann so das lokale Beleuchtungsverhalten und die lokale Felgenhorngeometrie ausreichend genau berücksichtigen.

Eine weitere vorteilhafte Ausgestaltung des erfindungsgemäßen Verfahrens ist dadurch gekennzeichnet, dass zur Bestimmung des Drehwinkel-Bezugspunktes an der Felge die Lage des Ventils verwendet wird. Das Ventil ist das herausragendste Merkmal eines Kraftfahrzeugrades, welches die Drehlage des Rades anzeigt. Es könnte auch ein Marker verwendet werden, um einen Drehwinkel-Bestimmungspunkt an der Felge zu markieren, wobei dazu wieder ein Kontakt mit dem Rad erforderlich wäre. In der Praxis hat sich gezeigt, dass die Lokalisierung des Ventils für die Zwecke der vorliegenden Messung ausreichend ist.

In Übereinstimmung mit dem Verfahren zum Auffinden eines Geometriedetails wenigstens einer Radfelge zur Bestimmung deren räumlicher Lage zu einem Messgerät der oben beschriebenen Art kann auch hier im Falle, dass mehrere Marker ermittelt werden, der geeignetste davon, bspw. das Ventil ausgewählt werden, oder im Falle, dass zunächst gar kein Marker aufgefunden wird, ein Teilbereich des Bildes der Radfelge ausgewählte werden, in dem oder anhand dessen in einem darauffolgenden Schritt ein geeigneter Marker ermittelt werden kann. Dies kann ebenfalls benutzer - oder computergesteuert anhand vorgebbarer Kriterien erfolgen.

Eine weitere vorteilhafte Ausgestaltung des erfindungsgemäßen Verfahrens ist dadurch gekennzeichnet, dass zur Segmentierung des Felgenumfangs eine Vorsegmentierung und eine Feinsegmentierung (Subpixelsegmentierung) durchgeführt wird. Diese Vorgehensweise ermöglicht in vorteilhafter Weise eine Vereinfachung der erforderlichen Rechenoperationen, um die Segmentierung mit ausreichender Genauigkeit durchführen zu können.

Eine weitere vorteilhafte Ausgestaltung des erfindungsgemäßen Verfahrens ist dadurch gekennzeichnet, dass die Daten bezüglich der Modellparameter des Modells, die die räumliche Lage der Radfelge definieren, wenn die Abbildung des Modellkörpers des Radfelgen-Geometriedetails mit dem erfassten Bild des Radfelgen-Geometriedetails übereinstimmt, ausgegeben oder angezeigt werden.

Eine weitere vorteilhafte Ausgestaltung des erfindungsgemäßen Verfahrens ist gekennzeichnet durch folgende Schritte: Starten der Bildaufnahme; Segmentierung der Felge, wobei auch eine Segmentierung des Ventils des Kraftfahrzeugrades erfolgt; Segmentierung des Felgenrandes; Überprüfung des Ergebnisses der Segmentierung auf ein vorhandenes und eindeutiges Ergebnis und ggf. Auswahl des geeignetsten Ergebnisses sowie ggf. Auswahl eines Teilbereichs eines Bilds der Felge für eine Nachsegmentierung; Rekonstruktion der 3D-Lage des Ventils unter Berücksichtigung der äußeren Kameraparameter; Rekonstruktion die Lage des Felgenrandes; Anzeigen des Ergebnisses der Berechnung, nämlich des Normalenvektors der Felgenrandebene und/oder Speichern derselben für die weitere Verrechnung.

Eine weitere vorteilhafte Ausgestaltung des erfindungsgemäßen Verfahrens ist dadurch gekennzeichnet, dass nach dem Starten der Bildaufnahme zunächst überprüft wird, ob die Beleuchtung für die Messung ausreichend ist, und dass die Beleuchtung entsprechend nachgestellt wird.

Eine weitere vorteilhafte Ausgestaltung des erfindungsgemäßen Verfahrens ist dadurch gekennzeichnet, dass die Nachstellung eine größere oder geringere Helligkeit des Lichtes für die Beleuchtung umfasst.

Das erfindungsgemäße Messgerät zur Bestimmung der räumlichen Lage einer Radfelge zu dem Messgerät, das wenigstens eine Kamera aufweist, wobei die Radfelge im Blickfeld der Kamera liegt, ist gekennzeichnet durch einen Rechner, der programmiert ist, um eines der vorstehend beschriebenen Verfahren durchzuführen.

Eine vorteilhafte Ausgestaltung des erfindungsgemäßen Messgeräts ist dadurch gekennzeichnet, dass in dem vorstehenden Messgerät zwei Kameras vorgesehen sind, die die Radfelgenkontur erfassen und unter unterschiedlichen Winkeln auf das Rad gerichtet sind:

Eine weitere vorteilhafte Ausgestaltung des erfindungsgemäßen Messgeräts ist dadurch gekennzeichnet, dass es je Kamera einen optischen Sensor, eine Objektiv, eine Blendenstelleinrichtung und eine Fokusstelleinrichtung umfasst, und dass die Einbaulage des Sensors und des Objektivs, die Blendeneinstellung und Fokuseinstellung vorjustiert sind.

Eine weitere vorteilhafte Ausgestaltung des erfindungsgemäßen Messgeräts ist dadurch gekennzeichnet, dass bei Zoom-Objektiven zudem die eingestellte Brennweite vorjustiert ist.

Eine weitere vorteilhafte Ausgestaltung des erfindungsgemäßen Messgeräts ist dadurch gekennzeichnet, dass eine Ausgabe- bzw. Anzeigevorrichtung zum Ausgegeben bzw. Anzeigen der Daten bezüglich der Modellparameter des Modells, die die räumliche Lage der Radfelge definieren, wenn die Abbildung des Modellkörpers des Radfelgen-Geometriedetails mit dem erfassten Bild des Radfelgen-Geometriedetails übereinstimmt, vorgesehen ist. Dadurch wird das Aufstellen des Messplatzes erleichtert, weil die Feinjustage des Bezugssystems jederzeit erneut durchgeführt werden kann.

Im wesentlichen entsprechen die Vorteile des erfindungsgemäßen Messgeräts bzw. seine Ausführungsbeispiele dem Vorteil des erfindungsgemäßen Verfahrens bzw. seiner Ausführungsbeispiele, wie oben beschrieben wurde.

Das erfindungsgemäße Verfahren zur Fahrwerkvermessung an Kraftfahrzeugen, ist dadurch gekennzeichnet, dass eines der oben genannten Verfahren zur Bestimmung der räumlichen Lage einer Radfelge zu einem Messgerät an den Rädern des Kraftfahrzeugs durchgeführt wird, dass die relativen Positionen der Messgeräte zur Durchführung der Messungen bestimmt werden, dass die Messergebnisse der Messungen an den Rädern des Kraftfahrzeugs unter Berücksichtigung der relativen Positionen der Messgeräte in Radstellungswerte umgerechnet werden, und dass die Radstellungswerte ausgegeben oder angezeigt werden.

Eine vorteilhafte Ausgestaltung des erfindungsgemäßen Verfahrens ist dadurch gekennzeichnet, dass die relativen Positionen der Messgeräte zur Durchführung der Messungen durch eine justierbare Montage der Messgeräte an einem Messplatz festgelegt werden.

Eine weitere vorteilhafte Ausgestaltung des erfindungsgemäßen Verfahrens ist dadurch gekennzeichnet, dass die relativen Positionen der Messgeräte zur Durchführung der Messungen durch ein Bezugssystem bestimmt werden, das an den Messgeräten angeordnet ist.

Eine weitere vorteilhafte Ausgestaltung des erfindungsgemäßen Verfahrens ist gekennzeichnet durch folgende Schritte: Durchführung der Messungen der einzelnen Messgeräte; Einlesen der Messergebnisse in einen Rechner; Berechnen der Transformationsmatrix aus den Ergebnissen der Bezugssystemessung; Transformieren der Ergebnisse der Messgeräte parallel zu den Achsen des Rechenkoordinatensystems; Umrechnen der Vektoren in das Koordinatensystem des Rechners über Versatzwinkel und Abstände in dem Bezugsmeßsystem; Bestimmen der Radstellungswerte in dem Rechenkoordinatensystem durch Auswertung der Stellung der Ergebnisvektoren zueinander zur Berechnung der entsprechenden Fahrwerkmesswerte; Übergeben der Ergebnisse zu den Radstellungs-Winkelwerten an eine Anzeigeeinrichtung und/oder Speichern derselben zur weiteren Verwendung.

Die Vorteile des erfindungsgemäßen Verfahrens zur Fahrwerkvermessung an Kraftfahrzeugen und der vorteilhaften Ausgestaltungen liegen darin, dass die oben beschriebenen Messgeräte und das entsprechende Verfahren in vorteilhafter Weise zur genauen Vermessung des gesamten Fahrwerks an Kraftfahrzeugen eingesetzt werden können.

Eine erfindungsgemäße Fahrwerkvermessungseinrichtung sowie eine erfindungsgemäße Prüfstraße für Kraftfahrzeuge ist gekennzeichnet durch Messgeräte zur Bestimmung der räumlichen Lage einer Radfelge zu einem Messgerät an den Rädern des Kraftfahrzeugs, die auf einem Messplatz derart positioniert sind, dass ein Messgerät jeweils einem der Räder des Kraftfahrzeugs zugeordnet ist, wobei die relativen Positionen der Messgeräte bei der Durchführung der Messungen bestimmt sind, einen Rechner, der die Messergebnisse der Messungen an den Rädern des Kraftfahrzeugs unter Berücksichtigung der relativen Positionen der Messgeräte in Radstellungswerte umrechnet, und durch eine Anzeige/Ausgabeeinrichtung, die die Radstellungswerte ausgibt oder anzeigt.

Eine Kraftfahrzeug-Prüfstraße umfasst einen Fahrwerkstester sowie einen Bremsenprüfstand und normalerweise noch eine Spurplatte, die bei der erfindungsgemäßen Kraftfahrzeugprüfstrasse jedoch vorteilhafterweise entfallen kann. In Prüforganisationen ist die Kraftfahrzeug-Prüfstraße oft noch um einen Gelenkspieltester erweitert, der wiederum in einer Grube oder einer Hebebühne intergriert ist. In manchen Fällen ist die Kraftfahrzeug-Prüfstraße noch um einen Abgastester und um ein Scheinwerfereinstellgerät erweitert.

Eine vorteilhafte Ausgestaltung der erfindungsgemäßen Fahrwerkvermessungseinrichtung oder Prüfstraße ist dadurch gekennzeichnet, dass die relativen Positionen der Messgeräte zur Durchführung der Messungen durch eine justierbare Montage der Messgeräte an einem Messplatz festgelegt werden.

Eine vorteilhafte Ausgestaltung der erfindungsgemäßen Fahrwerkvermessungseinrichtung oder Prüfstraße ist dadurch gekennzeichnet, dass die relativen Positionen der Messgeräte zur Durchführung der Messungen durch ein Bezugssystem bestimmt werden, das an den Messgeräten angeordnet ist.

Eine vorteilhafte Ausgestaltung der erfindungsgemäßen Fahrwerkvermessungseinrichtung oder Prüfstraße ist dadurch gekennzeichnet, dass beim Zusammenbau zweier Kameras in einem Messgerät zu einem Stereo-Messsystem die Kameras bezogen auf das Koordinatensystem des Messgeräts kalibriert sind.

Die Vorteile der erfindungsgemäßen Fahrwerkvermessungseinrichtung oder Prüfstraße für Kraftfahrzeuge entsprechen denen, die im Zusammenhang mit dem Verfahren zur Fahrwerkvermessung an Kraftfahrzeugen beschrieben wurden.

Die Erfindung ist nachfolgend anhand von Ausführungsbeispielen mit Bezug auf die beiliegenden Figuren näher erläutert.
- Figur 1: zeigt eine schematische Darstellung einer Fahrwerksvermessungseinrichtung mit ortsfest angeordneten Messgeräten und mit einem dazwischen stehenden Kraftfahrzeug;
- Figur 2: zeigt eine schematische Darstellung einer Fahrwerksvermessungseinrichtung mit ortsfest angeordneten Messgeräten und mit einem Bezugssystem für die Messgeräte untereinander, sowie ein dazwischen stehendes Kraftfahrzeug;
- Figur 3: zeigt ein Ablaufdiagramm für das erfindungsgemäße Verfahren zur Bestimmung der räumlichen Lage einer Radfelge zu einem Messgerät;
- Figur 4: zeigt ein detaillierteres Ablaufdiagramm für das erfindungsgemäße Verfahren zur Bestimmung der räumlichen Lage einer Radfelge zu einem Messgerät;
- Figur 5: zeigt ein Ablaufdiagramm für die Felgenschlagkompensation;
- Figur 6: zeigt ein Ablaufdiagramm für die Bestimmung des aktuellen Spur- und Sturzwinkels des Rades;
- Figur 7: zeigt ein Kamerabild einer Seitenansicht des Kraftfahrzeugrads aus Figur 1 mit drei darin erkannten Tori;
- Figur 8: zeigt eine schematische Schnittdarstellung des Kraftfahrzeugrads aus Figur 1;
- Figur 9: zeigt ein Kamerabild einer Seitenansicht des Kraftfahrzeugrads aus Figur 1 mit drei darin markierten äquidistanten Punkten;

- Figur 10: zeigt ein Kamerabild einer Seitenansicht des Kraftfahrzeugrads aus Figur 1 mit zwei darin erkannten Kreisbögen und eines Felgenhorntorus; und
- Figur 11: zeigt ein Kamerabild einer Seitenansicht des Kraftfahrzeugrads aus Figur 1 mit einem darin markierten Rechteck.

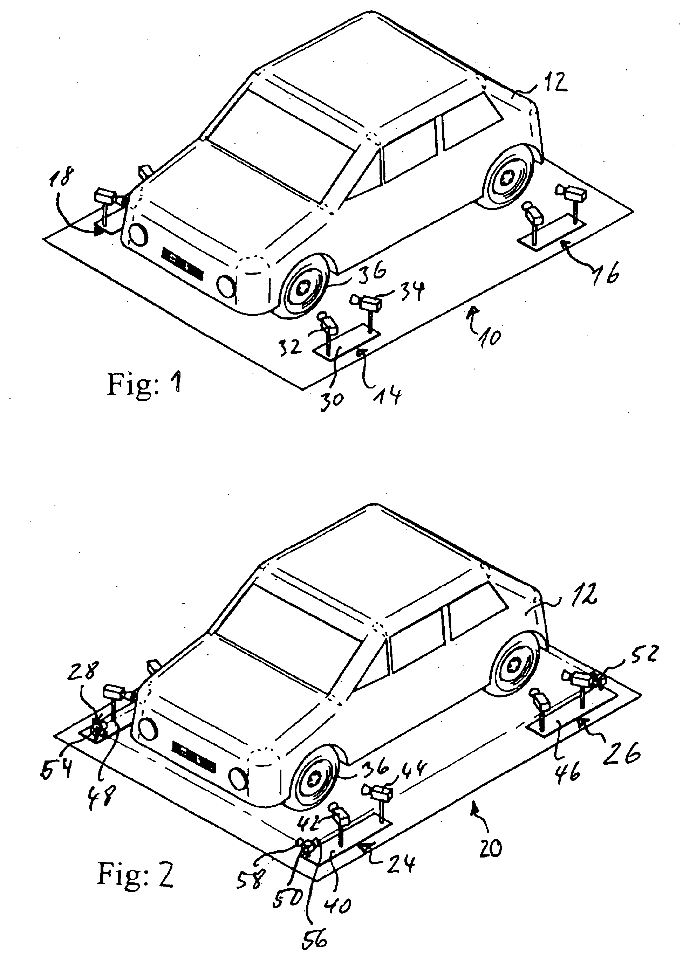

Figur 1 zeigt einen Messplatz 10, auf dem ein Kraftfahrzeug 12 steht, dessen Fahrwerk vermessen werden soll. Auf dem Messplatz 10 sind vier Messgeräte ortsfest angeordnet, von den drei Messgeräte 14, 16, 18 gezeigt sind, während das vierte Messgerät durch das Kraftfahrzeug 12 verdeckt ist.

Die Messgeräte 14, 16, 18 umfassen jeweils eine Grundplatte 30 und zwei Kameras 32, 34, die unter unterschiedlichen Winkeln auf das zugehörige Rad 36 des Kraftfahrzeugs 12 gerichtet sind. Bei dem Ausführungsbeispiel von Figur 1 sind die Messgeräte 14, 16, 18 fest auf dem Messplatz 10 montiert, wobei die relativen Winkellagen der Messgeräte untereinander sowie deren Abstände bei der Montage festgestellt werden und dann unverändert bleiben.

Figur 2 zeigt einen Messplatz 20 mit dem Kraftfahrzeug 12, wobei wiederum drei Messgeräte 24, 26, 28 gezeigt sind, während das vierte Messgerät durch das Kraftfahrzeug 12 verdeckt ist.

Bei dem Ausführungsbeispiel von Figur 2 weisen die Messgeräte 24, 26, 28 wiederum eine Bodenplatte 40 und zwei Kameras 42, 44 auf, die unter unterschiedlichen Winkeln auf das zugehörige Rad 36 gerichtet sind. Auf den Grundplatten 40, 46, 48 der Messgeräte 24, 26, 28 sind Bezugsystem-Messköpfe 50, 52, 54 vorgesehen, die eine optische Vermessung der relativen Winkellagen und der Abstände der Messgeräte 24, 26, 28 (und des durch das Kraftfahrzeug 12 verdeckten Messgeräts) gestatten. Dazu hat jeder Bezugsystem-Messkopf, wie beispielsweise der Bezugsystem-Messkopf 50 zwei Sende/Empfangseinheiten 56, 58, die zu dem in Längsrichtung des Fahrzeuges 12 gegenüberliegenden Bezugsystem-Messkopf 52 bzw. zu den quer zu dem Fahrzeug 12 gegenüberliegenden Bezugsystem-Messkopf 54 gerichtet sind. Mit einem derartigen Bezugssystem genügt eine grob justierte Aufstellung der Messgeräte 24, 26, 28, und die genaue Bestimmung der relativen Lagen und der Abstände der Messgeräte 24, 26, 28 zueinander kann laufend gemessen und auch nachjustiert werden.

Die Kalibrierung des Stereo-Messsystems umfaßt die Kalibrierung der "inneren Kameraparameter" und die Kalibrierung der Einbausituation der Messgeräte 24, 26, 28. Als "innere Parameter" werden alle Parameter bezeichnet, die kameraspezifisch sind, d.h. durch den Zusammenbau der Kamera festgelegt sind. Innere Parameter werden festgelegt durch die Einbaulage des optischen Sensors, das Objektiv und dessen Einbaulage, die Blendeneinstellung und Fokuseinstellung. Bei Zoom-Objektiven ist zudem die eingestellte Brennweite entscheidend. Die inneren Parameter können solange als konstant angesehen werden, wie keine mechanische Veränderung an der Kamera oder Änderung der Objektiveinstellung vorgenommen wird. Die Parameter werden mit Hilfe von vollständig bekannten Objekten bestimmt. Vorzugsweise derzeit die Kalibrierung mit einem 3D-Objekt, wie z.B. einer mit ausreichend vielen markanten Punkten versehenen Anordnung planarer Targets in verschiedenen Raumlagen.

Der Vollständigkeit halber sei erwähnt, dass die Kalibrierung der Einbausituation beim Zusammenbau zweier Kameras in einem Messgerät zu einem Stereo-Messsystem bezogen auf das Koordinatensystem des Messgeräts erfolgen muss. Dazu werden an dem Messgerät entsprechende Steckachsen, Anlageflächen und/oder Indexstifte vorgesehen, bezüglich denen sowohl das eingebaute Bezugsmeßsystem als auch das Stereomeßsystem kalibriert werden können. Alternativ kann eine optische Kalibrierung vorgenommen werden.

Die Qualität der Beleuchtung wird anhand der vorhandenen Messbilder überprüft. Dabei wird auf ausreichende Segmentierbarkeit, d.h. die Qualität des Kontrasts der Schattengrenze geprüft. Ist keine ausreichende Segmentierbarkeit gegeben, wird die Beleuchtung nachgestellt.

Die Messung der Bezugssystem-/Referenzsystem-Daten ist mit Ausnahme der Abstandsmessung identisch mit dem Verfahren bei den sich bekannten Fahrwerkvermessungssystemen. Ergebnisse des Messung des Bezugssystems sind die Lage der einzelner Messgeräte zueinander, einschließlich Abstand, und die Lage der einzelner Messgeräte zur Senkrechten. Die Abstandsmessung wird über die Winkelmessung zweier lichtemittierenden Dioden (LED's) mit bekanntem Abstand vorgenommen.

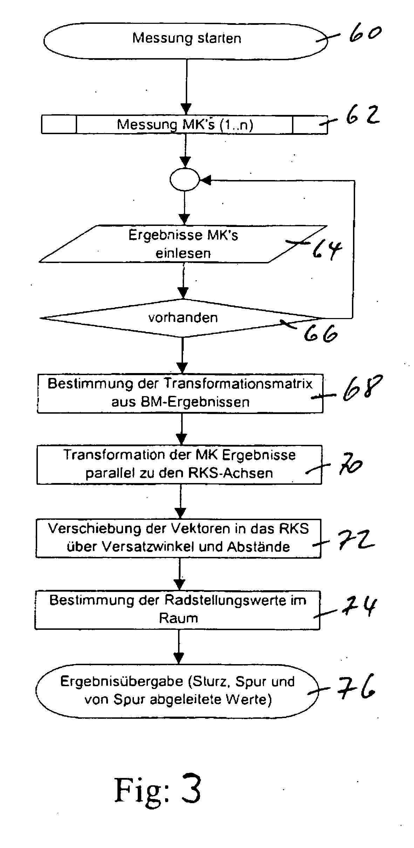

Figur 3 zeigt ein schematisches Ablaufdiagramm der Bestimmung der räumlichen Lage einer Radfelge zu einem Messgerät. Dabei wird davon ausgegangen, dass die oben genannten Messungen des Bezugssystems und die Kalibrierung der Messgeräte abgeschlossen ist.

Im Schritt 60 wird die Messung gestartet. Im Schritt 62 werden die Messungen der einzelnen Messgeräte 14, 16, 18 bzw. 24, 26, 28 durchgeführt, wobei die Messergebnisse in den Schritten 64, 66 in einem Rechner (nicht gezeigt) eingelesen werden. Der Rechner bestimmt in dem Schritt 68 die Transformationsmatrix aus den Ergebnissen der Bezugssystemmessung (BM-Ergebnisse), d.h. aus den Ergebnissen der Bezugssystemmessung. In dem Schritt 70 werden die Ergebnisse der Messgeräte (MK) parallel zu den Achsen des Rechenkoordinatensystems (RKS-Achsen) transformiert, wobei ein Koordinatensystem der Messgeräte als Rechenkoordinatensystem willkürlich festgelegt wird. Sodann werden in dem Schritt 72 die Vektoren in das Koordinatensystem des Rechners über Versatzwinkel und Abstände verschoben bzw. umgerechnet, wobei die einzelnen transformierten Ergebnisvektoren der Stereomessung in ein gemeinsames Rechenkoordinatensystem verschoben werden. In dem Schritt 74 bestimmt dann der Rechner die Radstellungswerte im Raum, d.h. insbesondere die einzelnen Spurwinkel der Vorderräder, der Gesamtspurwinkel der Vorderräder, die sogenannte geometrische Fahrachse und dergleichen, wie es bei herkömmlichen Fahrwerkvermessungseinrichtungen üblich ist. Dabei wird die Stellung der Ergebnisvektoren zueinander in dem Rechenkoordinatensystem ausgewertet, und daraus werden die entsprechenden Fahrwerkmesswerte berechnet. In dem Schritt 76 werden schließlich die Ergebnisse zu den Radstellungswerten, nämlich Sturz, Spur und von der Spur abgeleitete Winkelwerte an eine Anzeigeeinrichtung übergeben und/oder zur weiteren Verwendung gespeichert.

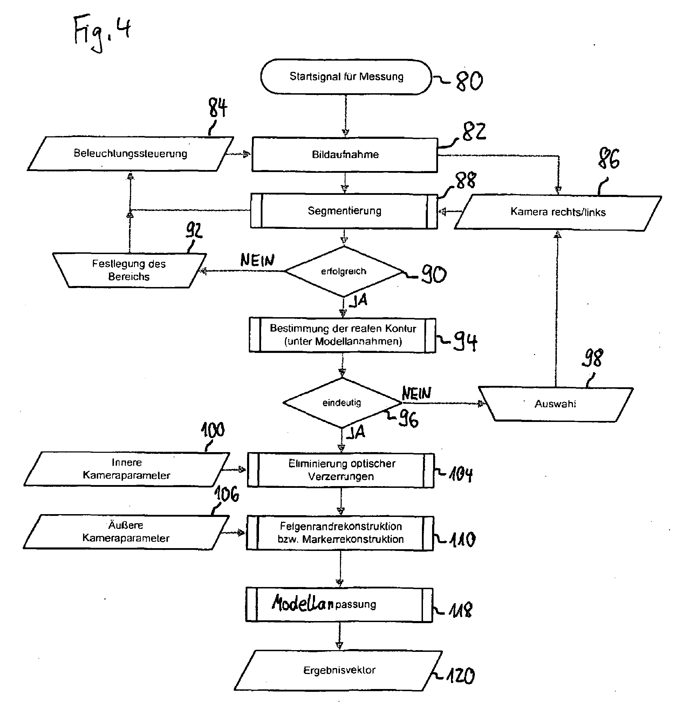

Figur 4 zeigt ein Ablaufdiagramm der Bestimmung der räumlichen Lage einer Radfelge zu einem Messgerät in einem Messgerät in etwas größerem Detail.

In dem Schritt 80 wird ein Startsignal für die Messung gegeben. Darauf wird im Schritt 82 die Bildaufnahme gestartet, und es wird wenigstens ein Bild der Radfelge 36 aufgenommen, wobei zunächst in Schritt 84 überprüft wird, ob die Beleuchtung für die Messung ausreichend ist, und gegebenenfalls wird die Beleuchtung nachgestellt. Die Nachstellung kann eine größere oder geringere Helligkeit des Lichtes für die Beleuchtung umfassen, wobei jedenfalls das Ziel darin besteht, einen möglichst guten Kontrast des von den Kameras beobachteten Teils der Felge bzw. des Felgenhorns zu erhalten. Dabei sind die Kameras, die rechts bzw. links im Bezug auf die Radachse angeordnet sind, aktiv (Schritt 86) und dienen sowohl zur Überprüfung der Beleuchtungssituation als auch, nach abgeschlossener Einstellung der Beleuchtung, zur Aufnahme der Stereobilder der Radfelge 36.

Im Schritt 88 erfolgt eine Segmentierung der Felge. Dabei können unter Berücksichtigung von Modellannahmen punkt- oder strichförmige Geometriedetails, bspw. das Ventil und dessen Winkellage, oder torusförmige, runde oder ellipsoide Geometriedetails, bspw. der Felgenrand oder das Felgenhom festgestellt werden. Die Segmentierung kann sich in eine Vorsegmentierung, eine Feinsegmentierung und eine Subpixelsegmentierung untergliedern, und sie wird vorgenommen, um bestimmte Winkelbereiche des Felgenrandes auszumessen und die gemessenen Werte bei der Ermittlung der Felgenrandebene berücksichtigen zu können.

Nach der Segmentierung wird in Schritt 90 überprüft, ob die Segmentierung verwertbare Ergebnisse geliefert hat, d.h. ob wenigstens ein brauchbares Geometriedetail ermittelte werden konnte.

Falls dies nicht der Fall ist, wird in Schritt 92 ein Bereich in dem Bild der Kameras festgelegt oder ausgewählt, in dem oder anhand dessen eine erneute Segmentierung in Schritt 88 vorgenommen wird, um ein brauchbares Geometriedetail zu ermitteln.

Falls die Überprüfung in Schritt 90 ergibt, dass wenigstens ein brauchbares Geometriedetail ermittelt werden konnte, wird nun in Schritt 94 unter Modellannahmen die reale Kontur des oder der ermittelten Geometriedetails bestimmt.

Danach wird in Schritt 96 überprüft, ob das Ergebnis eindeutig ist, d.h. ob genau eine oder mehrere Geometriedetail-Konturen vorliegen. Falls erfindungsgemäβ mehrere Geometriedetail-Konturen ermittelt worden sind, erfolgt eine Auswahl genau einer dieser Geometriedetail-Konturen und es wird mit Schritt 86 fortgefahren. Falls nicht erfindungsgemäβ genau eine Geometriedetail-Kontur ermittelt worden ist, wird anschließend mit Schritt 104 fortgefahren.

In dem Schritt 104 werden optische Verzerrungen in Bezug auf die Bilder der Radfelge eliminiert. Dabei werden in Schritt 100 die bisherigen Messergebnisse unter Berücksichtigung der inneren Kameraparameter umgerechnet.

Zur Felgenrandrekonstruktion (Schritt 110) werden die äußeren Kameraparameter berücksichtigt (Schritt 106). Dann wird eine erste Approximation der Felgenrandebene durchgeführt und das Winkelargument wird berechnet. Im Schritt 118 erfolgt eine Modellanpassung bzw. die endgültig Bestimmung der Felgenrandebene. Im Schritt 120 wird das Ergebnis der Berechnung, nämlich der Normalenvektor und der Zentrumspunkt der Felgenrandebene angezeigt und/oder für die weitere Verrechnung gespeichert. Die festgehaltenen Ergebnisse werden dann zur Berechnung der Radstellungswinkelwerte weiter verarbeitet, wie unter Bezugnahme auf Figur 3 in den Schritten 68 bis 76 beschrieben wurde.

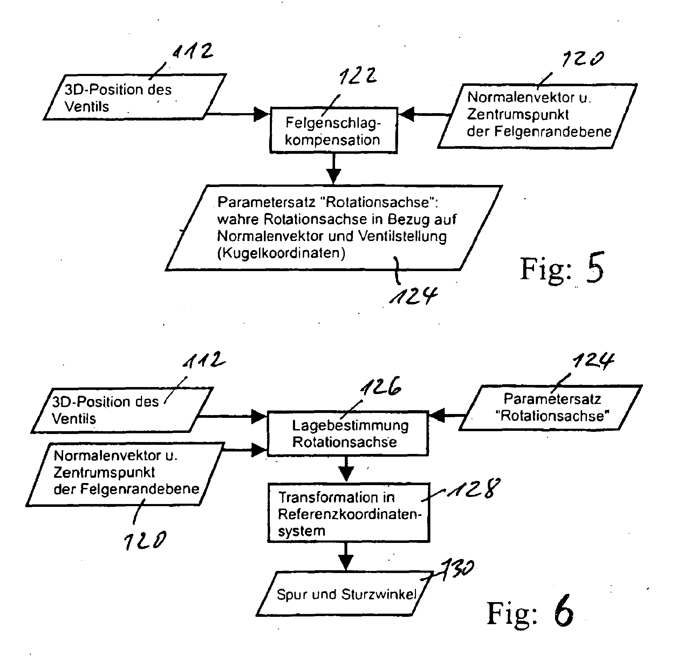

Figur 5 zeigt ein schematisches Ablaufdiagramm für die Felgenschlagkompensation. Zur Felgenschlagkompensation im Schritt 122 werden die zuvor im Schritt 120 (Figur 4) erhaltenen Ergebnisse über die 3D-Position des Ventils bzw. den Normalenvektor und den Zentrumspunkt der Felgenrandebene berücksichtigt, um einen Parametersatz ,Rotationsachse", das heißt die wahre Rotationsachse in Bezug auf den Normalenvektor und die Ventilstellung in Kugelkoordinaten zu erhalten. Die Messung der Raddrehung wird bei der Durchführung und Überwachung der Felgenschlagkompensation, bei der Bestimmung der Spreizung im Rahmen einer Einschlagvermessung und bei der Bestimmung der Nachlaufänderung bei der Nachlaufeinstellung benötigt. Für die Durchführung und Überwachung der Felgenschlagkompensation ist eine geringere Messgenauigkeit erforderlich. Eine Auflösung der Raddrehung auf ca. 10 Winkelminuten ist ausreichend. Zudem sollte eine beliebige Drehung des Rades erkannt werden können, wozu die Verfolgung und Vermessung des Ventils ausreicht. Das Ventil ist einzigartig am Umfang und kann mit entsprechender Genauigkeit lokalisiert werden.

Zur Bestimmung der Spreizung im Rahmen einer Einschlagvermessung und der Bestimmung der Nachlaufänderung bei der Nachlaufeinstellung ist die Raddrehung mit einer Genauigkeit von mindestens 2 Winkelminuten zu bestimmen. Allerdings muss keine beliebige Drehung des Rades gemessen werden können. Dazu kann die Bestimmung der 3D-Position des Ventils durchgeführt werden. Alternative kann die Vermessung und Verfolgung von nicht rotationssymmetrischen Kanten bzw. Strukturen in der Felge durchgeführt werden, wobei entsprechende Algorithmen wie zur Felgenrandbestimmung zur Anwendung kommen.

Figur 6 zeigt ein schematisches Ablaufdiagramm zur Berechnung der Spur- und Sturzwinkel aus den Ergebnissen des Schritts 120 der Figur 4 und dem Schritt 124 von Figur 5. Mit anderen Worten wird die Information über die 3D-Position des Ventils und die Information über den normalen Vektor und den Zentrumspunkt der Felgenrandebene sowie der Parametersatz "Rotationsachse" im Schritt 126 zur Lagebestimmung der Rotationsachse verwendet. Das Ergebnis des Schritts 126 wird in dem Schritt 128 in das Referenzkoordinatensystem des Rechners transformiert, der daraufhin im Schritt 130 die Spur- und Sturzwinkel berechnet.

Die Berechnungsgrundlagen für die Berechnung der Fahrwerksparameter sind dem Fachmann aus der DE 10 2004 013 441 A1 bekannt, und diese brauchen hier nicht noch einmal im einzelnen angegeben werden.

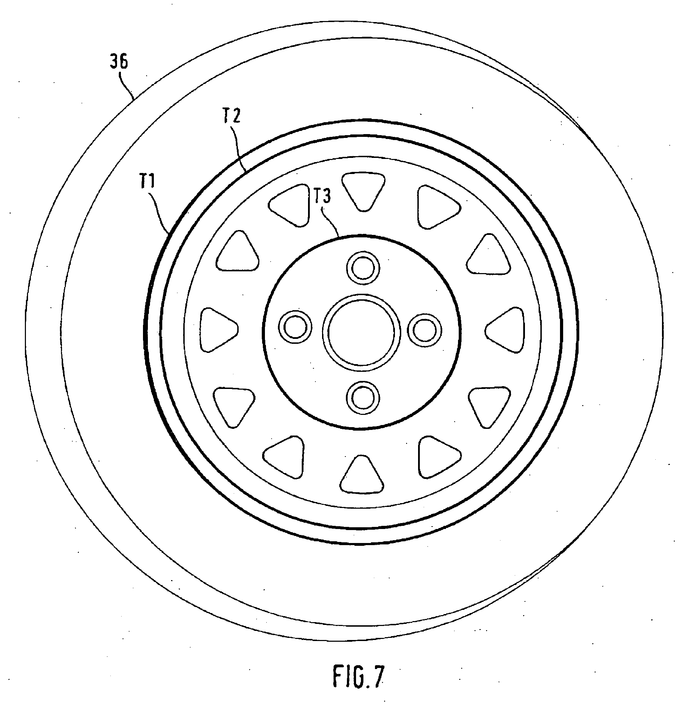

Bei dem in Figur 7 gezeigten Ausführungsbeispiel handelt es sich um die erfindungsgemäβe Verfahrensvariante, bei der von der Fahrwerksvermessungseinrichtung mehrere Felgengeometriedetails gefunden werden, und von denen das geeignetste Geometriedetail ausgewählt wird (Schritt 96).

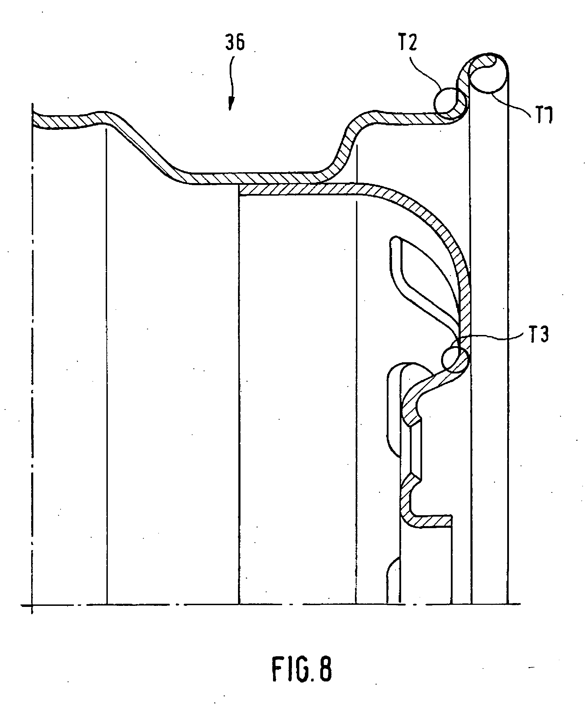

In Figur 7 ist das Kamerabild der Seitenansicht des vorderen linken Radfelge 36 gut zu erkennen, das mit der Messkamera 42 des Messgeräts 24 in Schritt 82 des Verfahrens gemäß Figur 4 aufgenommen worden ist. Dieses Kamerabild sowie die folgenden Kamerabilder werden bspw. auf einem Bildschrim dargestellt. Figur 8 zeigt eine schematische Schnittdarstellung des Kraftfahrzeugrads 36.

Auf der Radfelge 36 sind drei Tori zu erkennen, die durch die Segmentierung in Schritt 88 gemäß des Verfahrens von Figur 4 ermittelt worden sind, nämlich der Felgenhorntorus T1, ein weiterer Torus T2 mit etwas geringerem Durchmesser und ein deutlich kleinerer Torus T3. Somit ergibt der Überprüfungsschritt 90 ein positives Ergebnis, und in Schritt 94 werden die realen Konturen dieser drei Tori T1, T2 und T3 bestimmt.

Der Überprüfungsschritt 96 ergibt allerdings ein negatives Ergebnis, denn es ist nicht eindeutig, welcher der drei Tori T1, T2 und T3 nun am besten für die Bestimmung der räumlichen Lage der Radfelge 36 zu dem Messgerät 24 geeignet ist.

Zwar sind grundsätzlich alle diese drei Tori T1, T2 und T3 für das erfindungsgemäße Verfahren zur Bestimmung der räumlichen Lage einer Radfelge zu einem Messgerät geeignet, jedoch ist der Felgenhomtorus T1 zu bevorzugen, da sich damit die räumliche Lage der Radfelge 36 zu dem Messgerät 24 am Genauesten bestimmen lässt.

Dementsprechend ist in dem Fall, dass die Fahrwerksvermessungseinrichtung mehrere Tori, in diesem Fall die Tori T1, T2 und T3, ermittelt, derjenige davon für das weitere Verfahren auszuwählen, der sich am besten für die Weiterverarbeitung eignet.

Somit wird erfindungsgemäβ durch einen Benutzer oder nicht erfindungsgemäβ durch einen nicht gezeigten Computer in Schritt 98 der Felgenhorntorus T1 für das weitere Verfahren ausgewählt, und nach erneutem Durchlauf der Verfahrensschritte 86, 88, 90, 94 und 96 wird nun die räumliche Lage der Radfelge 36 zu dem Messgerät 24 durch die folgenden Verfahrensschritte 100, 104, 106, 110, 118,120 bestimmt.

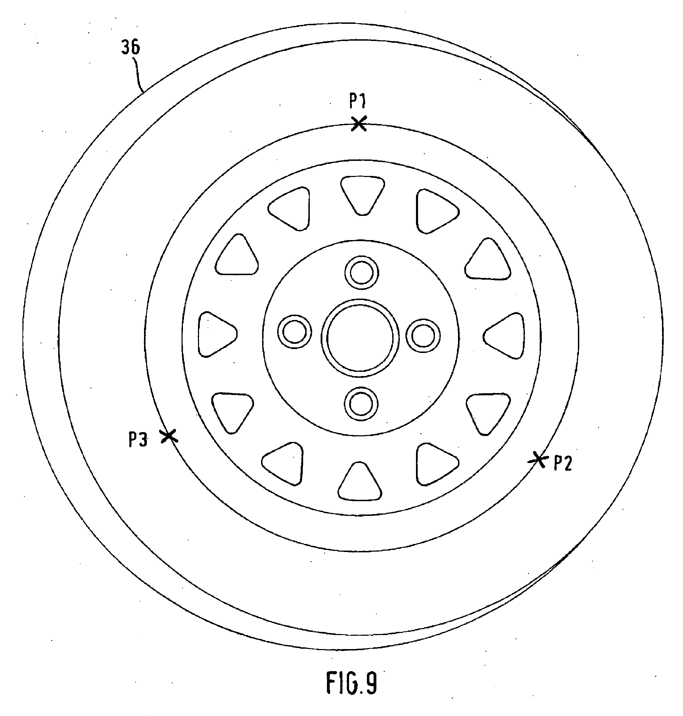

Bei den Ausführungsbeispielen der Figuren 9, 10 und 11 handelt es sich um die nicht unter die Erfindung Fallende Verfahrensvariante, bei der in Schritt 90 zunächst kein geeignetes Felgengeometriedetail erkannt wird und bei dem der Fahrwerksvermessungseinrichtung durch eine Auswahl eines Teilbereichs (Schritt 92) eine Hilfestellung gegeben wird, damit sie ein geeignetes Geometriedetail ermitteln und für das weitere Verfahren nutzen kann.

Figur 9 zeigt ein Kamerabild einer Seitenansicht des Kraftfahrzeugrads 36 mit drei darin markierten äquidistanten Punkten P1, P2 und P3.

Die Punkte P1, P2 und P3 sind äquidistant auf dem Felgenhorn-Torus T1 angeordnet.

In dem Beispiel von Figur 9 hat die Fahrwerksvermessungseinrichtung bspw. bedingt durch schlechte Sicht- oder Kontrastverhältnisse in der Segmentierung gemäß Schritt 88 kein Felgengeometriedetail, insbesondere keinen Torus auf der Radfelge 36 ermitteln können.

Daher werden nun in Schritt 92 bspw. von einem Benutzer die drei äquidistanten Punkte P1, P2 und P3 auf dem Felgenhorn-Torus T1 markiert, und die Fahrwerksvermessungseinrichtung kann aufgrund dieser drei äquidistanten Punkte P1, P2 und P3 in einer erneuten Segmentierung in Schritt 88 den Felgenhorntorus T1 ermitteln und darauf basierend das weitere Verfahren zur Bestimmung der räumlichen Lage der Radfelge zu dem Messgerät durchführen, wie es in Figur 4 gezeigt ist.

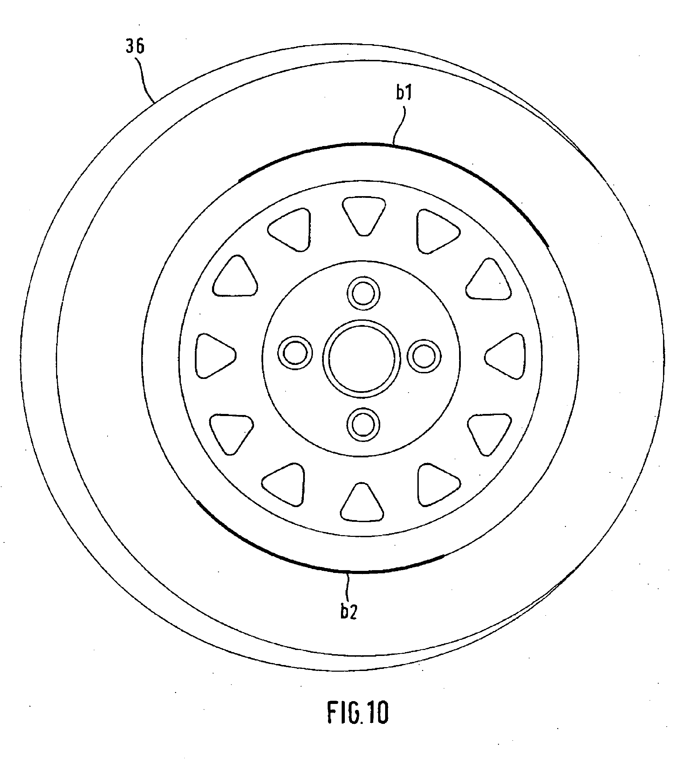

Figur 10 zeigt ein Kamerabild einer Seitenansicht des Kraftfahrzeugrads 36 mit zwei darin erkannten Kreisbogenabschnitten b1 und b2 eines Felgenhorntorus T1.

Die zwei Kreisbogenabschnitte b1 und b2 wurden von der Fahrwerksvermessungseinrichtung erkannt, konnten jedoch bei der Segmentierung in Schritt 88 nicht zu einem vollständigen Torus zusammengesetzt werden, da die zwischen den Kreisbogenabschnitten b1 und b2 liegenden Bereiche nicht erkannt werden konnten.

Bei diesem Beispiel werden in Schritt 92 bspw. von einem Benutzer mithilfe einer Tastatur oder einer Maus die Kreisbogenabschnitte b1 und b2 als auf einem gemeinsamen Torus T1 liegend identifiziert, so dass die Fahrwerksvermessungseinrichtung den Felgenhorntorus T1 in einer erneuten Segmentierung in Schritt 88 aus den Kreisbogenabschnitten b1 und b2 zusammensetzen oder ermitteln kann, und diesen Felgenhorntorus T1 dem weiteren Verfahren zur Bestimmung der räumlichen Lage der Radfelge zu dem Messgerät (Schritte 104 etc.) zugrunde legen kann.

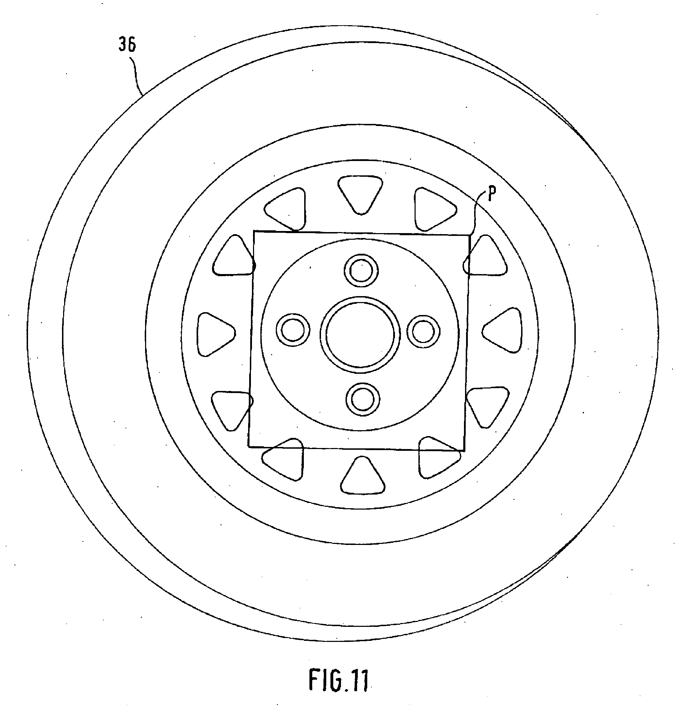

Figur 11 zeigt ein Kamerabild einer Seitenansicht des Kraftfahrzeugrads 36 mit einem darin markierten Rechteck R.

In Figur 11 ist der gleiche Fall wie in Figur 9 gezeigt, nämlich dass die Fahrwerksvermessungseinrichtung bei der Segmentierung in Schritt 88 bspw. infolge von schlechten Sicht- oder Kontrastverhältnissen kein Geometriedetail, insbesondere keinen Torus auf der Radfelge 36 ermitteln konnte.

Daher wird nun von einem Benutzer in Schritt 92 ein Rechteck R um den inneren Torus T3 (siehe Figur 7) gezogen, wodurch der Fahrwerksvermessungseinrichtung angezeigt wird, dass sich in diesem Bereich ein Geometriedetail befindet, so dass die Fahrwerksvermessungseinrichtung den Bereich des Rechtecks R der Radfelge 36 bei einer darauffolgenden erneuten Segmentierung in Schritt 88 genauer untersuchen und den Torus T3 ermitteln kann, und diesen Torus T3 dem weiteren Verfahren zur Bestimmung der räumlichen Lage der Radfelge zu dem Messgerät (Schritte 104 etc.) zugrunde legen kann.

### Bezugszeichenliste

- 10, 20: Messplatz
- 12: Kraftfahrzeug
- 14, 16, 18: Messgeräte
- 24, 26, 28: Messgeräte
- 32, 34, 42, 44: Messkameras
- 36: Radfelgen, Räder
- 30, 40, 46, 48: Grundplatten
- 50, 52, 54: Bezugssystem-Messköpfe
- 56, 58: Sende-/Empfangseinheiten
- T1: Felgenhorn-Torus
- T2, T3: Tori
- P1, P2, P3: äquidistante Punkte
- b1, b2: Kreisbogenabschnitte
- R: Rechteck

## Patentansprüche

1. Verfahren zum Auffinden eines Geometriedetails wenigstens einer Radfelge zur Bestimmung deren räumlicher Lage zu einem Messgerät, umfassend:
a) Ausrichten wenigstens einer Messkamera (32, 34; 42, 44) eines Messgeräts (14; 24) einer Fahrwerksvermessungseinrichtung auf eine Radfelge (36);
b) Erfassen eines Bildes einer Radfelge (36) durch die wenigstens eine Messkamera (32, 34; 42, 44);
c) Ermitteln mehrerer Geometriedetails (T1, T2, T3) in dem Bild der Radfelge;
d) Anzeigen mehrerer für das Verfahren geeigneter Geometriedetails (T1, T2, T3) auf einem angezeigten Bild der Radfelge (36);
e) Auswählen eines Geometriedetails (T1) aus den mehreren angezeigten Geometriedetails (T1, T2, T3) für die Bestimmung der räumlichen Lage der Radfelge (36) zu dem Messgerät (14; 24) durch einen Benutzer.

2. Verfahren nach Anspruch 1,
wobei das Auswählen aufgrund wenigstens eines Entscheidungskriteriums aus der Gruppe Bevorzugung des Felgenhors, Bevorzugung torusförmiger gegenüber punkt- oder strichförmiger Geometriedetails, Sichtbarkeit und/oder Kontrastverhältniss und Durchmesser torusförmiger Geometriedetails erfolgt.

3. Verfahren nach Anspruch 1 oder 2,
wobei in Schritt a) wenigstens eine Messkamera (32, 34; 42, 44) eines ersten Messgeräts (14; 24) auf eine erste Radfelge und wenigstens eine Messkamera eines zweiten Messgeräts (18; 28) auf eine zweite Radfelge ausgerichtet werden; und
wobei in Schritt b) jeweils wenigstens ein Bild jeder Radfelge durch die Messkameras erfasst wird.

4. Verfahren nach Anspruch 3,
wobei in Schritt a) wenigstens eine Messkamera eines ersten Messgeräts auf eine erste Radfelge, wenigstens eine Messkamera eines zweiten Messgeräts auf eine zweite Radfelge, wenigstens eine Messkamera eines dritten Messgeräts auf eine dritte Radfelge und wenigstens eine Messkamera eines vierten Messgeräts auf eine vierte Radfelge ausgerichtet werden; und
wobei in Schritt b) jeweils wenigstens ein Bild jeder Radfelge durch die Messkameras erfasst wird.

5. Verfahren nach Anspruch 3 oder 4, wobei nach der erfolgten Auswahl eines ermittelten Geometriedetails das Geometriedetail daraufhin überprüft wird, ob es auch in den Messkamera-Bildern der anderen Messgeräte vorhanden ist.

6. Verfahren nach Anspruch 2 oder 3,
wobei in Schritt c) wenigstens ein Geometriedetail ermittelt wird, das in allen Bildern der Radfelgen vorkommt; und
wobei in Schritt d) ein ermitteltes Geometriedetail für die Bestimmung der räumlichen Lage der Radfelgen zu den Messgeräten ausgewählt wird.

7. Verfahren nach einem der Ansprüche 1 bis 6, wobei zwei Stereo-Messkameras (32, 34; 42, 44) in einem Winkel auf eine Radfelge (36) ausgerichtet werden.

8. Verfahren nach einem der Ansprüche 1 bis 7, wobei das Bild der Radfelge (36) oder die Bilder der Radfelge (36) und/oder die mehreren ermittelten Geometriedetails auf einem Anzeigegerät dargestellt werden.

9. Verfahren nach einem der Ansprüche 1 bis 8, wobei die Auswahl eines ermittelten Geometriedetails (T1, T2, T3) in dem Bild der Radfelge (36) über ein Anzeigegerät und/oder über ein Eingabegerät erfolgt.

10. Verfahren nach einem der Ansprüche 1 bis 8, wobei die Auswahl eines ermittelten Geometriedetails (T1, T2, T3) in dem Bild der Radfelge (36) anhand eines oder mehrerer Bewertungskriterien erfolgt.

11. Verfahren nach einem der Ansprüche 1 bis 10, wobei die Fahrwerksvermessungseinrichtung die mehreren ermittelte Geometriedetails in dem Bild der Radfelge (36) bewertet.

12. Verfahren nach Anspruch 11, wobei die Bewertung der mehreren Geometriedetails auf dem Anzeigegerät mit angezeigt wird.

13. Verfahren nach einem der vorhergehenden Ansprüche, wobei es sich bei wenigstens einem Geometriedetail um einen Torus (T1, T2, T3), insbesondere um den Felgenhorn-Torus (T1) handelt.

14. Verfahren nach einem der vorhergehenden Ansprüche, wobei die Parameter des ausgewählten oder ermittelten Geometrie-Details gespeichert werden.

15. Verfahren zur Bestimmung der räumlichen Lage einer Radfelge zu einem Messgerät, das wenigstens eine Kamera aufweist, wobei die Radfelge im Blickfeld der Kamera liegt, umfassend:
- Bereitstellen eines Modells, das einen Modellkörper eines lokalisierbaren Geometriedetails (T1, T2, T3) sowie die räumliche Lage des Modellkörpers zu dem Messgerät durch Modellparameter beschreibt,
- Erfassen eines Bildes der Radfelge (36) mit der Kamera (32, 34; 42, 44) und Auffinden eines Geometriedetails (T1, T2, T3) wenigstens einer Radfelge (36) gemäss einem Verfahren nach einem der Ansprüche 1 bis 14,
- Anpassen der aus den Modellparametern resultierenden Abbildung des Modellkörpers an das Bild des Geometriedetails (T1, T2, T3) durch Verändern von Modellparametern des Modells, und
- Verfolgen der Veränderungen der Modellparameter des Modells beim Anpassen,
- wobei die Daten bezüglich der Lage des Modellkörpers des Geometriedetails (T1, T2, T3) die räumliche Lage des Geometriedetails (T1, T2, T3) und damit der Radfelge (36) selbst wiedergeben, wenn die aus den Modellparametern resultierende Abbildung des Modellkörpers des Geometriedetails mit dem erfassten Bild des Geometriedetails (T1, T2, T3) innerhalb vorgegebener Toleranzgrenzen übereinstimmt.

16. Verfahren zur Fahrwerkvermessung an Kraftfahrzeugen,
- wobei das Verfahren nach Anspruch 15 an den Radfelgen (36) des Kraftfahrzeugs (12) durchgeführt wird,
- wobei die relativen Positionen der Messgeräte zur Durchführung der Messungen bestimmt werden, wobei die Messergebnisse der Messungen an den Rädern (36) des Kraftfahrzeugs (12) unter Berücksichtigung der relativen Positionen der Messgeräte in Radstellungswerte umgerechnet werden, und wobei die Radstellungswerte ausgegeben oder angezeigt werden.

17. Messgerät zur Bestimmung der räumlichen Lage einer Radfelge zu dem Messgerät, wobei das Messgerät (14; 24) wenigstens eine Kamera (32, 42; 34, 44) aufweist, wobei die Radfelge (36) im Blickfeld der Kamera (32, 42; 34, 44 liegt, **gekennzeichnet durch** einen Rechner, der programmiert ist, um das erfahren nach Anspruch 15 durchzuführen.

18. Fahrwerkvermessungseinrichtung für Kraftfahrzeuge,
- mit wenigstens zwei Messgeräten nach Anspruch 17, die auf einem Messplatz (10, 20) derart positioniert sind, dass ein Messgerät jeweils einem der Räder (36) eines Kraftfahrzeugs (12) zugeordnet ist,
- wobei die relativen Positionen der Messgeräte bei der Durchführung der Messungen bestimmt sind,
- mit einem Rechner, der die Messergebnisse der Messungen an den Rädern (36) des Kraftfahrzeugs (12) unter Berücksichtigung der relativen Positionen der Messgeräte in Radstellungswerte umrechnet, und
- mit einer Anzeige/Ausgabeeinrichtung, die die Radstellungswerte ausgibt oder anzeigt.

19. Prüfstrasse für Kraftfahrzeuge,
- mit wenigstens zwei Messgeräten nach Anspruch 17, die derart positioniert sind, dass ein Messgerät jeweils einem der Räder (36) eines Kraftfahrzeugs (12) zugeordnet ist,
- wobei die relativen Positionen der Messgeräte bei der Durchführung der Messungen bestimmt sind,
- mit einen Rechner, der die Messergebnisse der Messungen an den Rädern (36) des Kraftfahrzeugs (12) unter Berücksichtigung der relativen Positionen der Messgeräte in Radstellungswerte umrechnet, und
- mit einer Anzeige/Ausgabeeinrichtung, die die Radstellungswerte ausgibt oder anzeigt.

## Claims

1. Method for locating a geometric detail of at least one wheel rim in order to determine their spatial position relative to a measuring device, comprising:
a) aligning at least one measuring camera (32, 34; 42, 44) of a measuring device (14; 24) of a chassis-measuring device with a wheel rim (36);
b) acquiring an image of a wheel rim (36) with the at least one measuring camera (32, 34; 42, 44);
c) determining a plurality of geometric details (T1, T2, T3) in the image of the wheel rim;
d) displaying a plurality of geometric details (T1, T2, T3) suitable for the method on a displayed image of the wheel rim (36); and
e) selecting a geometric detail (T1) from the plurality of displayed geometric details (T1, T2, T3) for determining the spatial position of the wheel rim (36) relative to the measuring device (14; 24) by a user.

2. Method according to Claim 1, in which a selection is performed on the basis of at least one decision criterion from the group of preferring the rim flange, preferring toroidal against punctiform or linear geometric details, visibility and/or contrast ratio and diameter of toroidal geometric details.

3. Method according to Claim 1 or 2, in which in step a) at least one measuring camera (32, 34; 42, 44) of a first measuring device (14; 24) is aligned with a first wheel rim, and at least one measuring camera of a second measuring device (18; 28) is aligned with a second wheel rim; and in which in step b) at least one image of each wheel rim is respectively acquired with the measuring camera.

4. Method according to Claim 3, in which in step a) at least one measuring camera of a first measuring device is aligned with a first wheel rim, at least one measuring camera of a second measuring device is aligned with a second wheel rim, at least one measuring camera of a third measuring device is aligned with a third wheel rim, and at least one measuring camera of a fourth measuring device is aligned with a fourth wheel rim; and in which in step b) at least one image of each wheel rim is respectively acquired with the measuring camera.

5. Method according to Claim 3 or 4, in which after the completed selection of a determined geometric detail the latter is checked as to whether it is also present in the measuring camera images of the other measuring devices.

6. Method according to Claim 2 or 3, in which in step c) at least one geometric detail is determined which occurs in all images of the wheel rims; and in which in step d) a determined geometric detail is selected for determining the spatial position of the wheel rims relative to the measuring devices.

7. Method according to one of Claims 1 to 6, in which two stereo measuring cameras (32, 34; 42, 44) are aligned at an angle with a wheel rim (36).

8. Method according to one of Claims 1 to 7, in which the image of the wheel rim (36) or the images of the wheel rim (36) and/or the plurality of determined geometric details are displayed on a display device.

9. Method according to one of Claims 1 to 8, in which the selection of a determined geometric detail (T1, T2, T3) in the image of the wheel rim (36) is performed via a display device and/or via an input device.

10. Method according to one of Claims 1 to 8, in which the selection of a determined geometric detail (T1, T2, T3) in the image of the wheel rim (36) is performed by means of one or more evaluation criteria.

11. Method according to one of Claims 1 to 10, in which the chassis-measuring device evaluates the plurality of determined geometric details in the image of the wheel rim (36).

12. Method according to Claim 11, in which the evaluation of the plurality of geometric details is also displayed on the display device.

13. Method according to one of the preceding claims, in which at least one geometric detail is a torus (T1, T2, T3), in particular the rim flange torus (T1).

14. Method according to one of the preceding claims, in which the parameters of the selected or determined geometric detail are stored.

15. Method for determining the spatial position of a wheel rim relative to a measuring device which has at least one camera, in which the wheel rim is situated in the field of view of the camera, comprising:
- providing a model which describes a model body of a localizable geometric detail (T1, T2, T3) and the spatial position of the model body relative to the measuring device with the aid of model parameters,
- acquiring an image of the wheel rim (36) with the camera (32, 34; 42, 44) and locating a geometric detail (T1, T2, T3) of at least one wheel rim (36) in accordance with a method according to one of Claims 1 to 14,
- fitting the image, resulting from the model parameters, of the model body to the image of the geometric detail (T1, T2, T3) by changing model parameters of the model, and
- tracking the changes in the model parameters of the model during fitting,
- in which the data referring to the position of the model body of the geometric detail (T1, T2, T3) represent the spatial position of the geometric detail (T1, T2, T3) and, therefore, of the wheel rim (36) itself when the image, resulting from the model parameters, of the model body of the geometric detail corresponds to the acquired image of the geometric detail (T1, T2, T3) within prescribed tolerance limits.

16. Method for chassis measurement on motor vehicles,
- in which the method according to Claim 15 is carried out on the wheel rims (36) of the motor vehicle (12), and
- in which the relative positions of the measuring devices for carrying out the measurements are determined, the measurement results of the measurements on the wheels (36) of the motor vehicle (12) being converted into wheel position values by taking account of the relative positions of the measuring devices, and the wheel position values being output or displayed.

17. Measuring device for determining the spatial position of a wheel rim relative to the measuring device, the measuring device (14; 24) having at least one camera (32, 42; 34, 44) and the wheel rim (36) being situated in the field of view of the camera (32, 42; 34, 44), **characterized by** a computer which is programmed to carry out the method according to Claim 15.

18. Chassis-measuring device for motor vehicles,
- having at least two measuring devices according to Claim 17 which are positioned on a measuring station (10, 20) in such a way that a measuring device is respectively assigned to one of the wheels (36) of a motor vehicle (12),
- the relative positions of the measuring devices being determined when the measurements are being carried out,
- having a computer which converts the measurement results of the measurements on the wheels (36) of the motor vehicle (12) into wheel position values by taking account of the relative positions of the measuring devices, and
- having a display/output device which outputs or displays the wheel position values.

19. Test line for motor vehicles,
- having at least two measuring devices according to Claim 17 which are positioned in such a way that a measuring device is respectively assigned to one of the wheels (36) of a motor vehicle (12),
- the relative positions of the measuring devices being determined when the measurements are being carried out,
- having a computer which converts the measurement results of the measurements on the wheels (36) of the motor vehicle (12) into wheel position values by taking account of the relative positions of the measuring devices, and
- having a display/output device which outputs or displays the wheel position values.

## Revendications

1. Procédé pour rechercher un détail géométrique d'au moins une jante de roue pour déterminer sa position dans l'espace par rapport à un appareil de mesure, comprenant les étapes suivantes :
a) orientation d'au moins une caméra de mesure (32, 34 ; 42, 44) d'un appareil de mesure (14 ; 24) d'un dispositif de mesurage de mécanisme de roulement sur une jante de roue (36) ;
b) acquisition d'une image d'une jante de roue (36) par l'au moins une caméra de mesure (32, 34 ; 42, 44) ;
c) détermination de plusieurs détails géométriques (T1, T2, T3) dans l'image de la jante de roue ;
d) affichage de plusieurs détails géométriques (T1, T2, T3) appropriés pour le procédé sur une image affichée de la jante de roue (36) ;
e) sélection d'un détail géométrique (T1) parmi les plusieurs détails géométriques (T1, T2, T3) affichés pour la détermination par un utilisateur de la position dans l'espace de la jante de roue (36) par rapport à l'appareil de mesure (14 ; 24).

2. Procédé selon la revendication 1, selon lequel la sélection s'effectue en se basant sur au moins un critère de décision du groupe préférence au rebord de jante, préférence aux détails géométriques de forme torique plutôt qu'en forme de points ou de traits, visibilité et/ou rapport de contraste et diamètre des détails géométriques de forme torique.

3. Procédé selon la revendication 1 ou 2,
selon lequel, à l'étape a), au moins une caméra de mesure (32, 34 ; 42, 44) d'un premier appareil de mesure (14 ; 24) est orientée sur une première jante de roue et au moins un caméra de mesure d'un deuxième appareil de mesure (18 ; 28) est orientée sur une deuxième jante de roue ; et
selon lequel, à l'étape b), au moins une image de chaque jante de roue est acquise respectivement par les caméras de mesure.

4. Procédé selon la revendication 3,
selon lequel, à l'étape a), au moins une caméra de mesure d'un premier appareil de mesure est orientée sur une première jante de roue, au moins un caméra de mesure d'un deuxième appareil de mesure est orientée sur une deuxième jante de roue, au moins un caméra de mesure d'un troisième appareil de mesure est orientée sur une troisième jante de roue et au moins un caméra de mesure d'un quatrième appareil de mesure est orientée sur une quatrième jante de roue ; et
selon lequel, à l'étape b), au moins une image de chaque jante de roue est acquise respectivement par les caméras de mesure.

5. Procédé selon la revendication 3 ou 4, selon lequel, après avoir effectué la sélection d'un détail géométrique déterminé, le détail géométrique est soumis à un contrôle pour vérifier s'il existe également dans les images de caméra de mesure des autres appareils de mesure.

6. Procédé selon la revendication 2 ou 3, selon lequel, à l'étape c), au moins un détail géométrique qui apparaît dans toutes les images des jantes de roue est déterminé ; et
selon lequel, à l'étape d), un détail géométrique déterminé est sélectionné pour la détermination de la position dans l'espace des jantes de roue par rapport aux appareils de mesure.

7. Procédé selon l'une des revendications 1 à 6, selon lequel deux caméras de mesure stéréoscopiques (32, 34 ; 42, 44) sont orientées selon un angle donné sur une jante de roue (36).

8. Procédé selon l'une des revendications 1 à 7, selon lequel l'image de la jante de roue (36) ou les images de la jante de roue (36) et/ou les plusieurs détails géométriques déterminés sont représentés sur un appareil d'affichage.

9. Procédé selon l'une des revendications 1 à 8, selon lequel la sélection d'un détail géométrique déterminé (T1, T2, T3) dans l'image de la jante de roue (36) s'effectue par le biais d'un appareil d'affichage et/ou par le biais d'un appareil de saisie.

10. Procédé selon l'une des revendications 1 à 8, selon lequel la sélection d'un détail géométrique déterminé (T1, T2, T3) dans l'image de la jante de roue (36) s'effectue au moyen d'un ou de plusieurs critères d'évaluation.

11. Procédé selon l'une des revendications 1 à 10, selon lequel le dispositif de mesurage de mécanisme de roulement évalue les plusieurs détails géométriques déterminés dans l'image de la jante de roue (36).

12. Procédé selon la revendication 11, selon lequel l'évaluation des plusieurs détails géométriques est également affichée sur l'appareil d'affichage.

13. Procédé selon l'une des revendications précédentes, selon lequel au moins un détail géométrique est un tore (T1, T2, T3), notamment un tore autour du bord de jante (T1).

14. Procédé selon l'une des revendications précédentes, selon lequel les paramètres du détail géométrique sélectionné ou déterminé sont mis en mémoire.

15. Procédé pour déterminer la position dans l'espace d'une jante de roue par rapport à un appareil de mesure, lequel présente au moins une caméra, la jante de roue se trouvant dans le champ de vision de la caméra, comprenant les étapes suivantes :
- mise à disposition d'un modèle qui décrit par des paramètres de modèle un modèle physique d'un détail géométrique (T1, T2, T3) localisable ainsi que la position dans l'espace du modèle physique par rapport à l'appareil de mesure,
- acquisition d'une image de la jante de roue (36) avec la caméra (32, 34 ; 42, 44) et recherche d'un détail géométrique (T1, T2, T3) d'au moins une jante de roue (36) conformément à un procédé selon l'une des revendications 1 à 14,
- adaptation de la représentation du modèle physique résultant des paramètres de modèle à l'image du détail géométrique (T1, T2, T3) en modifiant des paramètres de modèle du modèle, et
- suivi des modifications des paramètres de modèle du modèle lors de l'adaptation,
- procédé selon lequel les données en rapport avec la position du modèle physique du détail géométrique (T1, T2, T3) restituent la position dans l'espace du détail géométrique (T1, T2, T3) et ainsi de la jante de roue (36) elle-même, si la représentation du modèle physique du détail géométrique qui résulte des paramètres de modèle coïncide avec l'image acquise du détail géométrique (T1, T2, T3) dans des limites de tolérance prédéfinies.

16. Procédé de mesurage de mécanisme de roulement sur des véhicules automobiles,
- selon lequel le procédé selon la revendication 15 est mis en oeuvre sur les jantes de roue (36) du véhicule automobile (12),
- selon lequel les positions relatives des appareils de mesure sont déterminées pour la réalisation des mesures, les résultats de mesure des mesures sur les roues (36) du véhicule automobile (12) étant convertis en valeurs de position de roue en tenant compte des positions relatives des appareils de mesure et les valeurs de position de roue étant diffusées ou affichées.

17. Appareil de mesure pour déterminer la position dans l'espace d'une jante de roue par rapport à l'appareil de mesure, l'appareil de mesure (14 ; 24) présentant au moins une caméra (32, 42 ; 34, 44), la jante de roue (36) se trouvant dans le champ de vision de la caméra (32, 42 ; 34, 44), **caractérisé par** un ordinateur qui est programmé pour mettre en oeuvre le procédé selon la revendication 15.

18. Dispositif de mesurage du mécanisme de roulement pour véhicules automobiles,
- comprenant au moins deux appareils de mesure selon la revendication 17, lesquels sont positionnés sur un poste de mesure (10, 20) de telle sorte qu'un appareil de mesure est à chaque fois associé à l'une des roues (36) d'un véhicule automobile (12),
- les positions relatives des appareils de mesure étant déterminées lors de la réalisation des mesures,
- comprenant un ordinateur qui convertit les résultats de mesure des mesures sur les roues (36) du véhicule automobile (12) en valeurs de position de roue en tenant compte des positions relatives des appareils de mesure, et
- comprenant un dispositif d'affichage/de diffusion qui diffuse ou affiche les valeurs de position de roue.

19. Piste d'essai pour véhicules automobiles,
- comprenant au moins deux appareils de mesure selon la revendication 17, lesquels sont positionnés de telle sorte qu'un appareil de mesure est à chaque fois associé à l'une des roues (36) d'un véhicule automobile (12),
- les positions relatives des appareils de mesure étant déterminées lors de la réalisation des mesures,
- comprenant un ordinateur qui convertit les résultats de mesure des mesures sur les roues (36) du véhicule automobile (12) en valeurs de position de roue en tenant compte des positions relatives des appareils de mesure, et
- comprenant un dispositif d'affichage/de diffusion qui diffuse ou affiche les valeurs de position de roue.
